# EUROPEAN PATENT APPLICATION

(11) **EP 1 004 710 A2**
(43) Date of publication of application: **31.05.2000**
(21) Application number: 99203756.4
(22) Date of filing: 10.11.1999
(51) Int. Cl.: E03C 1/04

(54) **Unit for fixing knobs to a water delivery tap**

(30) Priority: 27.11.1998 IT RE980056
(71) Applicant: IDEAL STANDARD S.R.L., I-20131 Milano (IT)
(72) Inventor: Meda, Alberto, 20131 Milano (IT)
(74) Representative: Corradini, Corrado

(57) **Abstract**

The unit comprises at least one knob (8) having a dead cavity (81) arranged to surround the upper end of the valve stem (11) and comprising a threaded cylindrical seat (82), and a sleeve (12) the outer cylindrical surface of which has a first axial portion (121) arranged to engage said seat (82) and a second axial portion (122) shaped to form, in combination with the knob (8), an annular groove (18); said sleeve (12) has a grooved inner surface arranged to mate with a corresponding grooved outer surface (15) of the stem (11). There is also provided a skirt (20) arranged to enclose that region between the knob and the upper portion of the valve body and having a first end edge (21) constrained axially to the annular groove (18) but freely rotatable about it; the skirt (20) is rigidly fixed to the valve means (10).

## Description

Traditional water delivery taps are rigidly fixed to the appliance to which they are applied (bath-tub, bidet, wash-basin, sink,etc), and enclose one or more valve means for controlling the water flow. The valve means are usually contained in an outer casing (usually of metal) which also comprises the water delivery port or ports, or are inserted into respective seats provided directly in the appliance at a distance from the delivery port. Each valve means comprises a stem to be rotated about its axis to regulate the flow. Each stem is rotated by a provided knob which is gripped by the user.

The invention relates to a unit for fixing the knobs to the respective stems of the valve means.

An object of the invention is to provide a fixing unit which enables the knob to be easily and quickly mounted or removed without it being necessary to provide unattractive screw passage holes in the knob.

This and other objects are attained by the invention as characterised in the claims.

The invention is based on the fact of comprising at least one knob having a dead cavity arranged to surround the upper end of the valve stem and comprising a threaded cylindrical seat, and a sleeve having an externally threaded first axial portion arranged to engage said threaded seat and a second axial portion which projects outwards in an axial direction from the dead cavity and has its outer surface shaped to form an annular groove in combination with the knob. Said sleeve has a grooved inner surface arranged to mate with a corresponding outer surface of the stem, in such a manner as to form therewith a combination which causes the stem to rotate with the sleeve while enabling the sleeve to be axially mounted on and withdrawn from the stem.

A skirt with a surface of revolution is provided to enclose that region between the knob and the upper portion of the valve body and has a first circular end edge inserted into the annular groove, to which it is constrained axially but is freely rotatable about it. The second circular end edge of the skirt is secured to the outer casing of the tap or to the valve means.

The invention is described in detail hereinafter with the aid of the accompanying figures, which illustrate a non-exclusive embodiment thereof.
Figure 1 is an exploded perspective view of the invention applied to a tap having two valve means applied to the same outer casing.
Figure 2 is a detail of the tap of Figure 1, shown in section on a vertical plane passing through the axis of the stem of one valve means.
Figure 3 is the same as Figure 2 showing a stage during the mounting of the knob.
Figure 4 shows an enlarged detail of Figure 2.
Figure 5 shows anther enlarged detail of Figure 2.
Figure 6 shows an enlarged detail of Figure 1.
Figure 7 is an exploded perspective view of the invention applied to a tap having two valve means inserted in respective seats provided directly in the wash-basin at a distance from the delivery port.
Figure 8 is a detail of the tap of Figure 7, shown in section on a vertical plane passing through the axis of the stem of one valve means.
Figure 9 shows an enlarged detail of Figure 8.

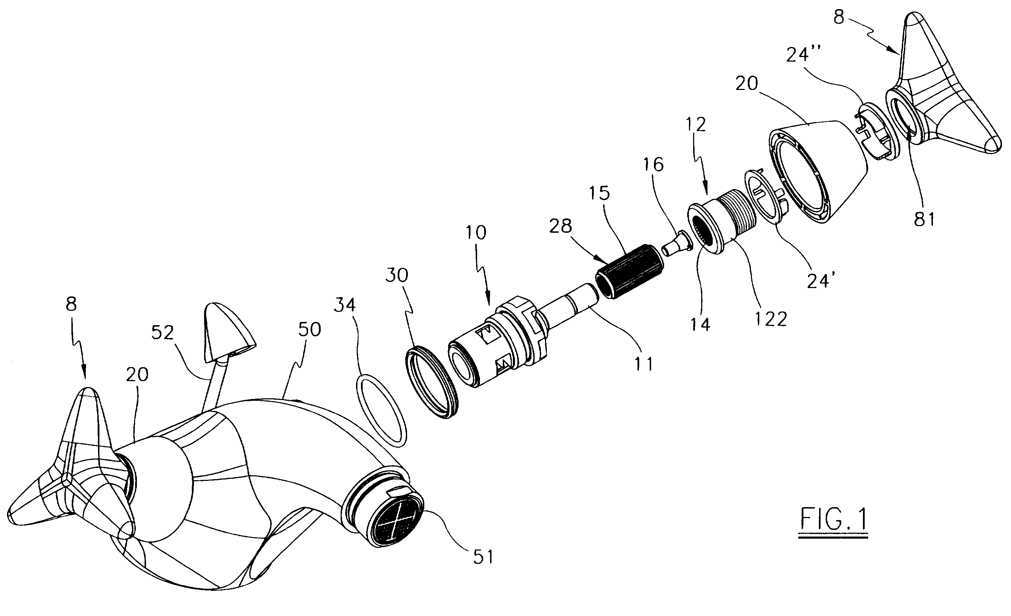

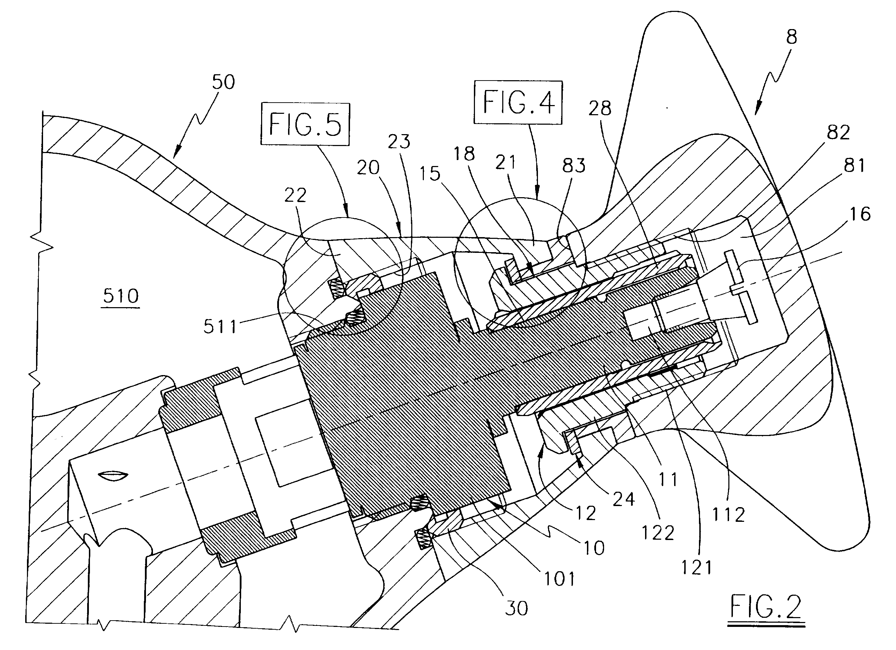

The taps shown in the figures are of two different types. The first type, shown in Figures 1-6, comprises a single casing 50 to be applied to a bidet, wash-basin, bath-tub, etc. or to a wall, and enclosing two valve means 10, a delivery port 51 and a rod 52 operating the pop-up plug for the appliance.

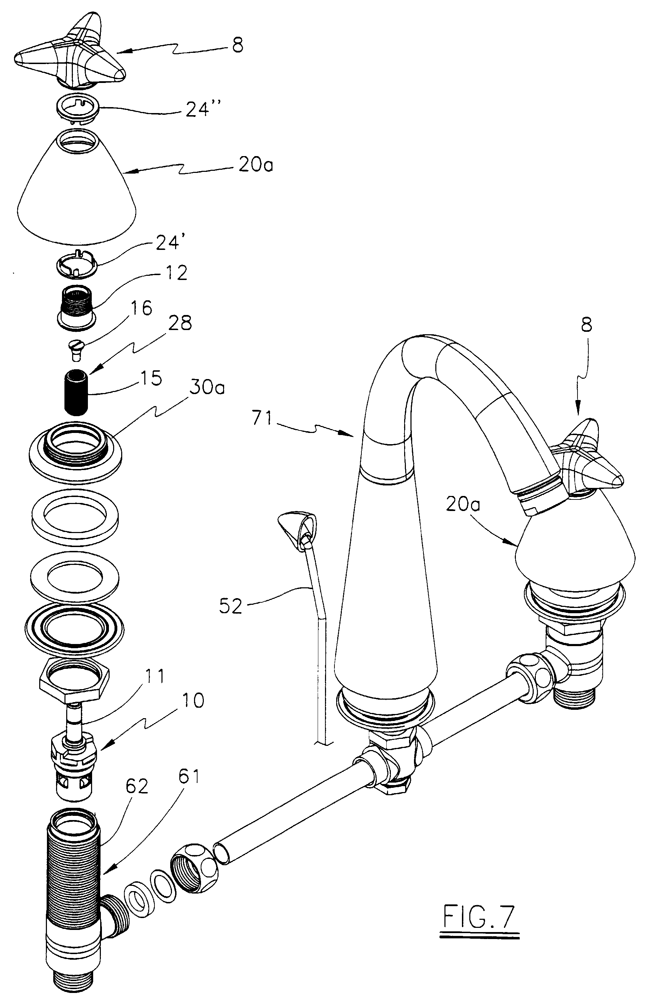

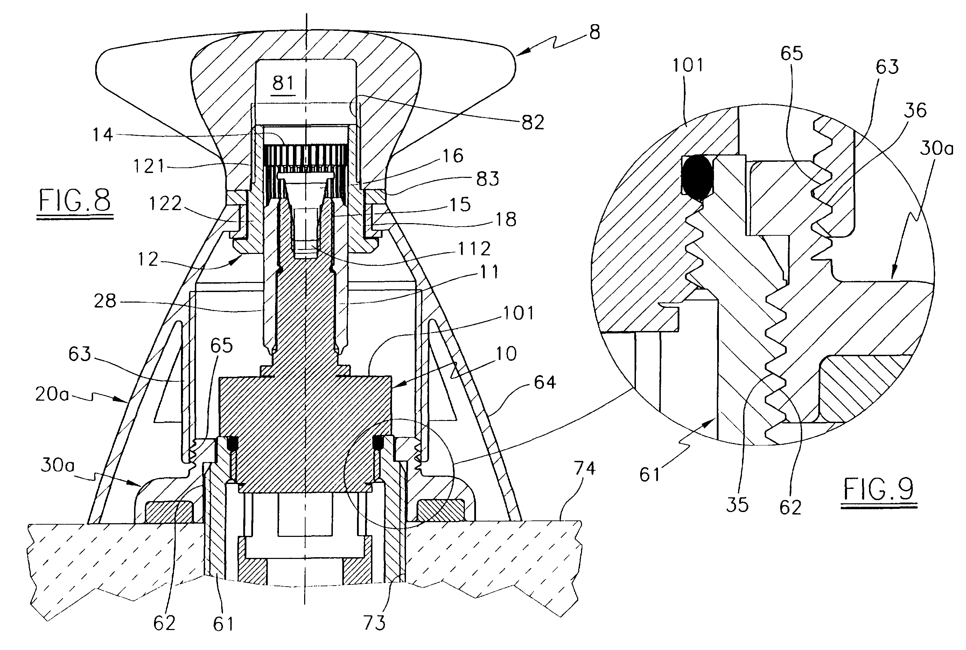

The second type, shown in Figures 7-9, comprises two valve means 10 each inserted in a suitable seat 73 provided directly in the bidet, wash-basin, etc., or in a wall, and spaced from each other and from the delivery port 71.

The fixing unit of the invention can be applied to both types of tap. It can also be applied to other types of tap, different from those illustrated.

With reference to Figures 1-6, the tap illustrated comprises two valve means 10 inserted in a chamber 510 defined within the casing 50. For each valve means 10 the chamber possesses a mouth 511 with a threaded surface, into which the valve means is screwed and tightened. From each valve means 10 there emerges a stem 11 coaxial to the mouth 511 and projecting outwards from the chamber 510. The stem 11 is able to be rotated about its axis to regulate the water flow through suitable members (of known type) of the valve means. To rotate the stem 11 a knob 8 is provided, to be gripped by the user.

According to the invention, the knob 8 comprises a dead cavity 81 arranged to surround the upper end of the stem 11, and possessing a threaded seat 82.

The unit of the invention also comprises a first sleeve 12 having an inner surface 14 grooved in an axial direction, to mate with a corresponding outer grooved surface 15 applied to the stem 11, and form with this a combination which causes the stem 11 to rotate with the sleeve 12 while enabling the sleeve 12 to be axially mounted on and withdrawn from the stem 11. The grooved surface 15 can be formed either directly on the stem 11 or on a second sleeve 28, described in detail hereinafter, which is then mounted on the stem 11.

The cylindrical outer surface of the sleeve 12 has a first threaded axial portion 121 arranged to engage the seat 82 of the dead cavity 81, and a second axial portion 122 which projects outwards from the cavity 81 in a radial direction and having its surface shaped to form an annular groove 18 in combination with the knob 8.

The unit of the invention also comprises a skirt 20 having the shape of a surface of revolution to enclose the region between the knob 8 and the upper portion of the valve means 10 (including the stem 11) projecting from the casing 50. The skirt 20 has a first circular end edge 21 inserted into the annular groove 18, to which it is constrained axially but is freely rotatable about it (with regard to the rotation of the stem 11 about its axis).

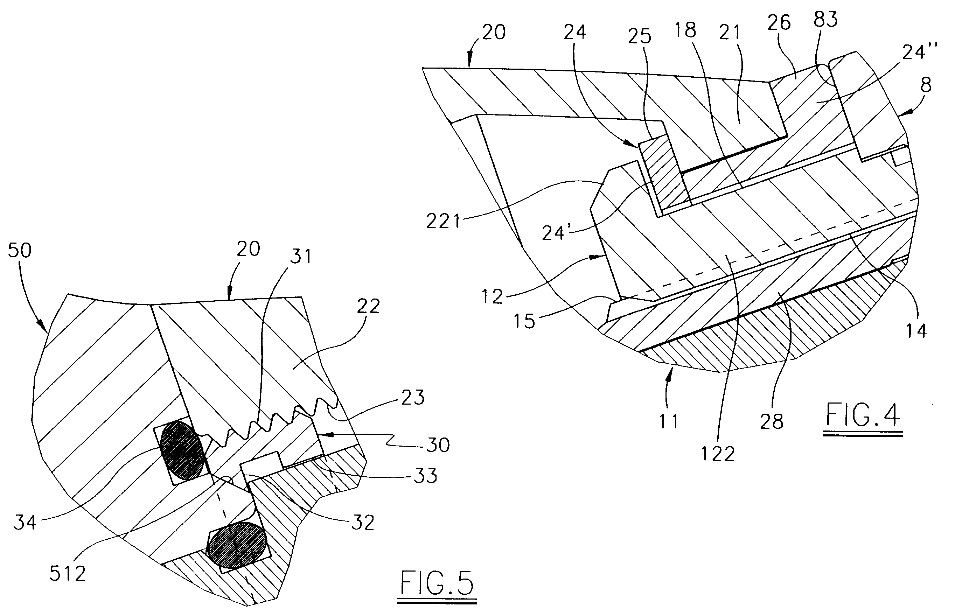

In the embodiment shown in the figures, the second axial portion 122 of the sleeve 12 comprises a circular projection 221 projecting radially outwards to define said annular groove 18 in combination with the edge 83 of the mouth of the dead cavity 81 of the knob 8 (see Figure 4).

Advantageously an annular element 24 acting as an anti-friction bearing is provided housed virtually as an exact fit in said annular groove 18. This element 24 is of C cross-section, comprising two radial circular projections 25 and 26 (see Figure 4) embracing the first circular edge 21 of the skirt 20 on three sides. In detail, the annular element 24 is composed of two annular components 24' and 24'' of synthetic anti-friction resin, each having a respective radial circular projection 25 and 26 respectively, which are fitted together by snap-inserting axial prolongations 27' into corresponding axial cavities 27'' provided in the other component, to form a single piece (see Figure 6 in particular).

The skirt 20 also comprises a second circular end edge 22 to be secured rigidly to the valve means 10.

Advantageously, the fixing unit of the invention comprises a second sleeve 28 to be mounted on and rigidly fixed onto the stem 11 of the valve means 10, and having its outer surface defining said grooved surface 15 to mate with the inner surface 14 of the first sleeve 12, to define with this latter a combination which causes the stem 11 to rotate with the sleeve 12 while enabling the sleeve 12 to be axially mounted on and withdrawn from the stem 11.

To rigidly fix the second sleeve 28 onto the stem 11, this latter is provided with a threaded axial dead hole 112 in its free end. A conically headed screw 16 is engaged in the hole 112. As the screw 16 is being screwed into the hole 112, its head penetrates axially into the hole 112 in the manner of a wedge, with the result that the end of the stem 11 is expanded and clamped strongly within the sleeve 28.

To secure the skirt 20 to the outer casing 50 of the tap or to the valve means 10, a second annular element 30 is provided to be fixed to the casing 50 or to the means 10 or to both, and has a threaded outer surface 31 to engage a corresponding threaded inner surface 23 provided on the skirt 20 in proximity to its second circular end edge 22.

In the embodiment shown in Figures 1-6, the second annular element 30 has an inner cylindrical surface 33 to be mounted as an exact fit about the body of the valve means 10, in a position adjacent to the mouth 511 of the outer casing 50, and possesses an edge 32 of tooth-shaped cross-section which projects radially inwards of the surface 33. In the outer surface of the mouth 511 there is provided a small seat 512 with a conical surface converging towards the mouth axis and towards the interior of the casing 50. The body 101 of the valve means 10 possesses a corner projecting radially outwards slightly above the seat 512. The edge 32 is shaped to fit between the seat 512 and the projecting corner of the body 101, so as to be clamped therein rigid with the means 10 (see Figure 5).

To fix the knob 8 to the tap, the annular element 30 is firstly fitted into the relative seat 512, if necessary by snap-forcing it and with the possible addition of an O-ring 34 positioned in contact with it. In addition, the second sleeve 28 is fixed about the stem 11, locking it by means of the screw 16.

Separately, the two components 24' and 24'' are fitted together about the edge 21 of the skirt 20, to form a single annular element 24 enclosing said edge 21. The sleeve 12 is then inserted through the annular element 24, and its threaded portion 121 is engaged with the threaded seat 82 of the cavity 81. This forms the annular groove 18 which axially engages the element 24, which itself axially engages the edge 21. The result is that the skirt 20 becomes axially constrained to the knob 8, whereas it can rotate relative to the knob freely about the axis of the sleeve 12.

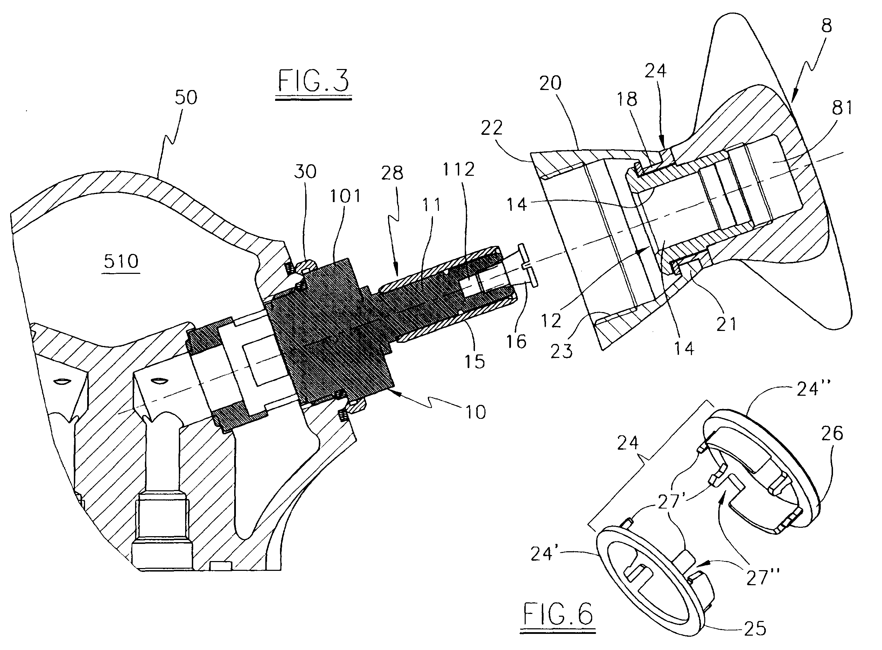

At this point the tap is in the configuration shown in Figure 3.

The skirt 20 can now be inserted axially to lie about the valve means 10 and the knob 8 be mounted about the stem 11 so that the second sleeve 28, rigid with the stem, becomes inserted into the first sleeve 12 such that the respective grooves mate. In this manner the knob 8 is made rotationally rigid with the stem 11.

Finally the threaded inner seat 23 of the skirt 20 is screwed onto the outer surface 31, also threaded, of the annular element 30.

In this manner the skirt 20 becomes rigidly connected to the tap. with the knob axially constrained to the skirt 20 but able to freely rotate about it.

Figures 7-9 show a second embodiment of the fixing unit of the invention, suitable for a different type of tap. Equal reference numerals indicate equal or equivalent parts.

This second embodiment differs from the preceding only in the different shape of the skirt 20a and second annular element 30a.

The skirt 20a has an outer portion of generally conical shape, which rests on the upper surface 74 of the appliance to cover the region about the seat 73 into which the valve means 10 is inserted.

The valve means 10 is inserted into a tubular column 61 rigidly fixed into the seat 73. The outer cylindrical surface of the column 61 has a threaded portion 62 terminating close to the upper end of the column 61, which projects above the surface 74.

The second annular element 30a possesses a threaded inner cylindrical surface 35 arranged to engage the threaded portion 62. It also comprises a threaded outer cylindrical surface 36 coaxial with the first. The skirt 20a comprises an under-skirt 63 positioned inside the outer portion 64 and joined thereto to form a single piece. The upper edge of the under-skirt 63 is joined to the inner surface of the outer portion 64 and possesses a lower edge 65 the inner surface of which is threaded and arranged to engage the threaded outer surface of the annular element 30a.

In this embodiment, the skirt 20a and hence the knob 8 are constrained axially by screwing the lower edge 65 of the skirt 20a to the second annular element 30a.

Numerous modifications of a practical and applicational nature can be made to the invention, but without leaving the scope of the inventive ideal as hereinafter claimed.

## Claims

1. A unit for fixing knobs to water delivery taps, the tap comprising a valve means (11) for controlling a water flow and having a stem (11) to be rotated about its axis to regulate the flow, characterised by comprising:
at least one knob (8) having a dead cavity (81) arranged to surround the upper end of the valve stem (11) and comprising a threaded cylindrical seat (82), and a sleeve (12) the outer cylindrical surface of which has a first axial portion (121) arranged to engage said seat (82) and a second axial portion (122) shaped to form an annular groove (18); said sleeve (12) having a grooved inner surface arranged to mate with a corresponding outer surface (15) of the stem (11), in such a manner as to form therewith a combination which causes the stem (11) to rotate with the sleeve (12) while enabling the sleeve (12) to be axially mounted on and withdrawn from the stem (11); and a skirt (20) arranged to enclose that region between the knob and the upper portion of the valve body and having a first end edge (21) constrained axially to the annular groove (18) but freely rotatable about it, the skirt (20) being rigidly fixed to the valve means (10).

2. A unit as claimed in claim 1, characterised in that said second axial portion (122) of the outer surface of the sleeve (12) comprises a circular projection (22) projecting radially outwards to define, in combination with the edge (83) of the dead cavity of the knob, said annular groove (18).

3. A unit as claimed in claim 1, characterised by comprising an annular element (24) housed virtually as an exact fit in said annular groove (18) and having a cross-section in the form of a C to embrace on three sides the first circular edge (21) of the skirt (20), to act as an anti-friction bearing.

4. A unit as claimed in claim 3, characterised in that said annular element (24) is composed of two annular components 24' and 24'' of synthetic anti-friction resin each having a respective radial circular projection which fit together to form a single body.

5. A unit as claimed in claim 1, characterised by comprising a second sleeve (28) to be mounted on and rigidly fixed to the stem (11) of the valve means and having an outer surface (15) grooved to mate with the inner surface (14) of the first sleeve (12) to form therewith a combination which causes the stem (11) to rotate with the first sleeve (12) while enabling the first sleeve (12) to be axially mounted on and withdrawn from the stem.

6. A unit as claimed in claim 1, characterised by comprising a second annular element (30, 30a) to be secured to the outer casing (50) of the tap or to the valve means (20), and having a threaded outer surface (31, 36) which engages a corresponding threaded inner seat (23, 65) provided on the skirt (20) close to the bottom thereof.

7. A unit as claimed in claim 6, characterised in that:
the second annular element (30) has an inner cylindrical surface (33) to be mounted as an exact fit about the body of the valve means (10), in a position adjacent to the mouth (511) of the outer casing (50), and possesses an edge (32) of tooth-shaped cross-section which projects radially inwards of the surface (33); in the inner circular edge of the mouth (511) there being provided a small seat (512) with a conical surface converging towards the mouth axis and towards the interior of the casing (50);
the body (101) of the valve means (10) possessing a corner projecting radially outwards slightly above the seat (512);
the edge (32) being shaped to fit between the seat (512) and the projecting corner of the body (101), so as to be clamped therein rigid with the valve means (10).

8. A unit as claimed in claim 6, characterised in that:
the valve means (10) is inserted into a tubular column (61) rigidly fixed into the seat (73), the outer cylindrical surface of the column (61) having an externally threaded portion (62) which projects above the surface 74;
the second annular element (30a) possessing a threaded inner cylindrical surface (35) arranged to engage the threaded portion (62) and also comprising a threaded outer cylindrical surface (36) coaxial with the first;
the skirt (20a) comprising a lower edge (65) the inner surface of which is threaded and arranged to engage the threaded outer surface of the annular element (30).
